# EUROPEAN PATENT APPLICATION

(11) **EP 4 024 814 A1**
(43) Date of publication of application: **06.07.2022**
(21) Application number: 20863187.9
(22) Date of filing: 03.07.2020
(51) Int. Cl.: H04L 29/08

(54) **DATA MANAGEMENT METHOD, RELATED PRODUCT AND COMMUNICATION SYSTEM**

(30) Priority: 12.09.2019 CN 201910866770
(71) Applicant: Huawei Technologies Co., Ltd., Longgang District Shenzhen, Guangdong 518129 (CN)
(72) Inventor: HU, Xiaokun, Shenzhen, Guangdong 518129 (CN)
(74) Representative: Thun, Clemens
(86) International application number: PCT/CN2020/100207
(87) International publication number: WO 2021/047259

(57) **Abstract**

Embodiments of the present invention disclose a data management method, a related product, and a communications system. A binding support function BSF device stores a session record, and the session record is created by a policy control function PCF device. The method includes: The BSF device sends a positioning parameter of the session record to the PCF device; and the BSF device receives a response message returned by the PCF device, and deletes the session record when determining, based on the response message, that a session corresponding to the positioning parameter does not exist in the PCF device. Session stability can be further ensured while a storage capacity of the BSF device is ensured.

## Description

This application claims priority to Chinese Patent Application No. 201910866770.7, filed with the China National Intellectual Property Administration on September 12, 2019 and entitled "DATA MANAGEMENT METHOD, RELATED PRODUCT, AND COMMUNICATIONS SYSTEM", which is incorporated herein by reference in its entirety.

### TECHNICAL FIELD

The present invention relates to the field of communications technologies, and in particular, to a data management method, a related product, and a communications system.

### BACKGROUND

The 3rd generation partnership project (3rd generation partner project, 3GPP) defines a binding support function (binding support function, BSF) device. The BSF device provides a network session binding function of a 5G core (5G core, 5GC), to help a network exposure function (network exposure function, NEF) device or an application function (application function, AF) device select, based on an address of user equipment in networking of a plurality of policy control function (policy control function, PCF) devices, a PCF device in which the user equipment is located, so as to apply for a quality of service (quality of service, QoS) policy.

A session record is included on the BSF device. After user equipment supporting 5G registers to the 5GC network, a PCF device invokes a service application programming interface (application programming interface, API) of the B SF device to perform session record registration and deregistration, that is, the PCF triggers creation or deletion of the session record on the BSF. The session record is session-related data, and may also be referred to as session record data, session record information, session binding data, or the like.

In a normal session procedure, session record information is deleted after a session ends. For example, the PCF device invokes the API of the BSF device to send an identifier of a session record to the BSF device, to indicate the BSF device to delete the session record. However, in actual application, messages sent from the PCF to the BSF to delete some session records may be lost due to a bearer network problem or some other problems. Or, due to some other problems, session records can't be deleted normally, and are retained in the BSF. The session record that needs to be deleted is stored in the BSF device, and belongs to junk data. Junk data accumulation causes a problem that a new session record cannot be created on the BSF device and consequently a new service cannot be used.

To save a capacity of the BSF and resolve the problem that the new service cannot be used, the junk data needs to be aged, that is, deleted. Currently, a commonly used aging manner is performing aging based on a timestamp. If aging is performed at an interval of one month, it is considered that session record information whose duration exceeds one month is junk data.

When data is aged in the timestamp manner, there is a problem that a valid session record may mistakenly deleted. As a result, a user cannot access the Internet or cannot make a voice call.

### SUMMARY

Embodiments of the present invention provide a data management method, a related product, and a communications system, to accurately recognize and delete junk data, so as to ensure session stability while ensuring a storage capacity of a BSF device.

According to a first aspect, an embodiment of the present invention provides a data management method. A binding support function BSF device stores a session record, and the session record is created by a policy control function PCF device. The method includes: The BSF device sends a positioning parameter of the session record to the PCF device; and the BSF device receives a response message returned by the PCF device, and deletes the session record when determining, based on the response message, that a session corresponding to the positioning parameter does not exist in the PCF.

In this embodiment, deletion management may be triggered periodically, or may be triggered by an event, for example, an event that an occupation rate of storage space used to store the session record in the BSF device is too high. The positioning parameter may be any parameter that can uniquely identify the session record or the session. Usually, there are a plurality of PCF devices in a network, and different PCF devices manage different sessions. Therefore, a session record includes information about a specific PCF corresponding to the session record, for example, an address of the PCF, that is, an Internet protocol (Internet protocol, IP) address and a port of the PCF, or a fully qualified domain name (fully qualified domain name, FQDN). The response message may include any information indicating whether the session exists, for example, an error code or an error parameter value whose meaning can be known by both the BSF device and the PCF device.

In addition, the BSF device may send positioning parameters one by one, or may send a plurality of positioning parameters corresponding to a same PCF at the same time. If a plurality of positioning parameters corresponding to a same PCF are sent at the same time, results in the response message that indicate whether sessions corresponding to the positioning parameters exist are in a one-to-one correspondence with the positioning parameters.

In an optional implementation, the method further includes: determining the PCF device based on the session record if the BSF device determines that deletion management needs to be performed on the session record. Then, the BSF device may send the positioning parameter of the session record to the PCF device.

This embodiment provides conditions for triggering the BSF device to send the positioning parameter. Specific content that deletion management needs to be performed on the session record may be: Duration of storing the session record in the device exceeds a threshold, or a time period for sending the positioning parameter is reached. Specifically, a condition for performing deletion management on the session record may be set based on an actual requirement. This is not uniquely limited in this embodiment.

In an optional implementation, that the BSF device receives a response message returned by the PCF device, and determines, based on the response message, that a session corresponding to the positioning parameter does not exist in the PCF device includes: The BSF device receives the response message returned by the PCF device, where the response message carries an error code used to indicate that the session corresponding to the positioning parameter does not exist in the PCF device; and determines, based on the error code, that the session corresponding to the positioning parameter does not exist in the PCF device.

In this embodiment, in a manner in which the error code is used, less information may be used to transfer a result about whether the session corresponding to the positioning parameter exists in the PCF device.

In an optional implementation, the determining the PCF device based on the session record includes: reading, from the session record, an address of the PCF device that is recorded in the session record.

That the BSF device sends a positioning parameter of the session record to the PCF device includes: The BSF device sends the positioning parameter of the session record to the address of the PCF device.

This embodiment provides a means for determining the PCF device by using the address of the PCF device. Because the address of the PCF device exists in the session record, a data processing amount can be reduced by using the means, and the positioning parameter is sent quickly.

In an optional implementation, that the BSF device determines that deletion management needs to be performed on the session record includes: The BSF device reads a timestamp of the session record from the session record; determines, based on the timestamp, duration of storing the session record in the BSF device; and sends the positioning parameter of the session record to the PCF device when determining that the duration of storing the session record in the BSF device exceeds a validity period of the session record.

This embodiment provides a means for determining, by using the timestamp and the session record validity period, whether deletion management needs to be performed. This can facilitate accurate management on a single session record.

In an optional implementation, the method further includes: updating the timestamp in the session record information to a current time point if determining, based on the response message, that the session corresponding to the positioning parameter exists.

According to a second aspect, an embodiment of the present invention further provides a binding support function BSF device. The BSF device stores a session record, the session record is created by a policy control function PCF device, and the BSF device includes:
a parameter sending unit, configured to send a positioning parameter of the session record to the PCF device;
a response receiving unit, configured to receive a response message returned by the PCF device; and
a deletion control unit, configured to delete the session record when determining, based on the response message, that a session corresponding to the positioning parameter does not exist in the PCF device.

In an optional implementation, the BSF further includes:
a management determining unit, configured to determine that deletion management needs to be performed on the session record; and
a target determining unit, configured to determine the PCF device based on the session record after the determining unit determines that deletion management needs to be performed on the session record.

In an optional implementation, the response receiving unit is configured to receive the response message returned by the PCF device, where the response message carries an error code used to indicate that the session corresponding to the positioning parameter does not exist in the PCF device; and
the deletion control unit is configured to determine, based on the error code, that the session corresponding to the positioning parameter does not exist in the PCF device.

In an optional implementation, the target determining unit is configured to read, from the session record, an address of the PCF device that is recorded in the session record; and
the parameter sending unit is configured to send the positioning parameter of the session record to the address of the PCF device.

In an optional implementation, the management determining unit is configured to: read a timestamp of the session record from the session record; determine, based on the timestamp, duration of storing the session record in the BSF device; and determine that the duration of storing the session record in the BSF device exceeds a validity period of the session record; and
the parameter sending unit is configured to send the positioning parameter of the session record to the PCF device when the management determining unit determines that the duration of storing the session record in the BSF device exceeds the validity period of the session record.

In an optional implementation, the management determining unit is further configured to update the timestamp in the session record information to a current time point if the deletion control unit determines, based on the response message, that the session corresponding to the positioning parameter exists.

According to a third aspect, an embodiment of the present invention further provides a binding support function BSF device, including a processor, a memory, and a transceiver. The processor, the memory, and the transceiver are connected in a communicable manner, the memory stores a session record, and the session record is created by a policy control function PCF device;
the memory stores program code; and
the processor is configured to read the program code and cooperate with the transceiver to implement a function of the method according to any one of claims 1 to 7.

According to a fourth aspect, an embodiment of the present invention further provides a communications system, including a binding support function BSF device and a policy control function PCF device. The BSF device stores a session record, the session record is created by the PCF device, and the B SF device is the B SF device according to any one of embodiments of the present invention.

The PCF device is configured to send a response message to the BSF device based on a positioning parameter sent by the BSF device, where the response message carries information used to determine whether a session corresponding to the positioning parameter exists in the PCF device.

According to a fifth aspect, an embodiment of the present invention further provides a computer-readable storage medium. The storage medium stores program code, the program code includes program instructions, and when being executed by a processor, the program instructions enable the processor to cooperate with a transceiver to implement a function of any method disclosed in embodiments of the present invention.

In the technical solutions provided in all the foregoing aspects, the positioning parameter includes a binding identifier of the session record, an address of user equipment that uses the session, a data network name DNN, or single network slice selection assistance information (single network slice selection assistance information, S-NSSAI).

In the technical solutions provided in all the foregoing aspects, the BSF device may send a positioning parameter of one session record at a time, or may send, at a time, positioning parameters of session records corresponding to a plurality of sessions managed by one PCF device.

It can be learned from the foregoing technical solutions that embodiments of the present invention have the following advantages: The BSF device that stores the session record sends the positioning parameter to the corresponding PCF device. When it is determined that the corresponding session does not exist in the PCF device, information about the session record may be accurately determined as junk data, so that the junk data is accurately recognized and deleted, and session stability can be further ensured while a storage capacity of the BSF device is ensured.

### BRIEF DESCRIPTION OF DRAWINGS

To describe technical solutions in embodiments of the present invention more clearly, the following briefly describes the accompanying drawings required for describing embodiments.
FIG. 1 is a schematic diagram of a network architecture according to an embodiment of the present invention;
FIG. 2 is a schematic diagram of a network architecture according to an embodiment of the present invention;
FIG. 3 is a schematic flowchart of a method according to an embodiment of the present invention;
FIG. 4 is a schematic flowchart of a method according to an embodiment of the present invention;
FIG. 5 is a schematic diagram of a network architecture according to an embodiment of the present invention;
FIG. 6 is a schematic diagram of a structure of a BSF device according to an embodiment of the present invention;
FIG. 7 is a schematic diagram of a structure of a BSF device according to an embodiment of the present invention; and
FIG. 8 is a schematic diagram of a structure of a communications system according to an embodiment of the present invention.

### DESCRIPTION OF EMBODIMENTS

The following describes embodiments of the present invention with reference to the accompanying drawings in embodiments of the present invention.

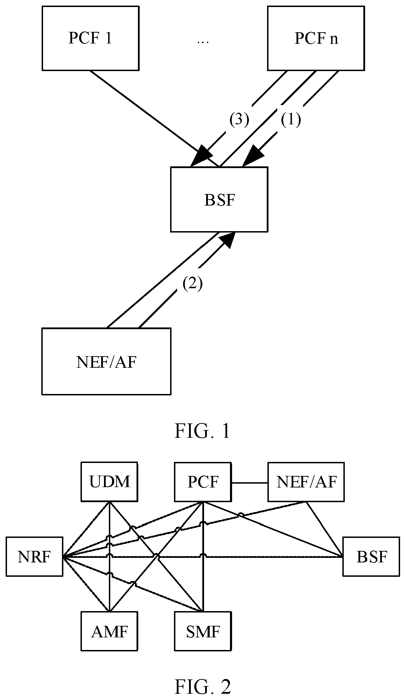

FIG. 1 and FIG. 2 each are a schematic diagram of a network structure of a typical application scenario according to an embodiment of the present invention. The schematic diagram of the structure shown in FIG. 1 includes a PCF device, a BSF device, and an NEF device or AF device. There may be n PCF devices, and a specific quantity is not limited.

The diagram of the structure shown in FIG. 2 further includes a network repository function (Network Repository Function, NRF) device, an application function (Application Function, AF) device, a session management function (Session Management Function, SMF) device, and a unified data management (Unified Data Management, UDM) device.

The SMF provides a 5G session management function, the PCF provides a 5G policy control function, the NEF provides a network capability exposure function, the AF provides an application function, the NRF provides a service registration/service discovery function, and the BSF device provides a session binding function of voice and data services.

According to the definition in 3GPP TS 23.513, the BSF may be deployed independently or together with network elements such as the PCF, the SMF, and the NRF. Regardless of a deployment form of the BSF device, the BSF device serves as a functional entity, and helps the NEF and the AF find, in networking of a plurality of PCFs, a PCF serving a user.

Corresponding to the system structures shown in FIG. 1 and FIG. 2, the following is a specific procedure in which the PCF device controls session record creation and deletion.

(1) After user equipment registers and authenticates, the PCF device invokes an Nbsf registration management (Nbsf management register) service API provided by the BSF device to insert a session record of the user equipment into a database of the BSF device. The session record includes information such as an address of the user equipment, a data network name (data network name, DNN), an address of the PCF device serving the user equipment, and a host name or a domain name used when the PCF device also serves as a policy and charging rules function (policy and charging rules function, PCRF) device in a 4G network. After the session record is successfully inserted into the BSF device, the BSF device generates a globally unique binding identifier (Bindingld) of the session record, and sends the binding identifier to the PCF by using a response message.

The foregoing Nbsf is a name of a service interface that is defined by the 3GPP and externally provided by the BSF. The address of the user equipment includes one or more of an Internet protocol version 4 (Internet protocol version 4, IPv4) address, an Internet protocol version 6 (Internet protocol version 6, IPv6) address, and a media access control (media access control, MAC) address. The address of the PCF device includes one or more of a fully qualified domain name (fully qualified domain name, FQDN), an IPv4 address, an IPv4 address + IP-Domain-Id, and an IPv6 address.

(2) The NEF device/AF device invokes an Nbsf management discovery (Nbsf_management discovery) service API provided by the BSF to query, from the BSF device, the session record of the user equipment that is stored in the BSF device, to obtain the address of the PCF serving the user equipment. Then, a service request for QoS policy application may be initiated to the PCF device.

(3) When the user equipment is deregistered, the PCF device invokes an Nbsf management deregistration (Nbsf_management deregister) service API provided by the BSF device to send the Bindingld corresponding to the session record of the user equipment. After receiving the Bindingld, the BSF device deletes the session record that is corresponding to the Bindingld and that is stored in the BSF.

In the foregoing procedure, (1) is a session record creation process, (2) is a process in which the NEF device and the AF device initiate QoS policy application by using the session record, and (3) is a process in which the PCF deletes the session record in a normal case.

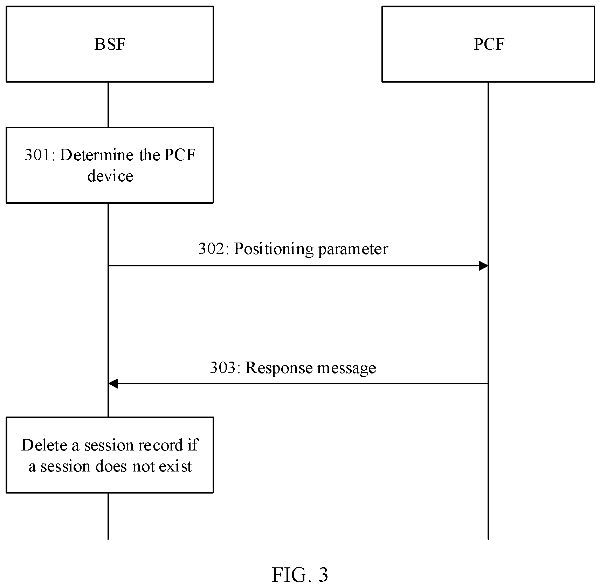

FIG. 3 shows a data management method according to an embodiment of the present invention. The method is applied to a case in which a binding support function BSF device stores a session record, and the session record is created by a policy control function PCF device. A procedure of the method includes the following steps.

301: Determine the PCF device.

In this embodiment, a trigger condition for determining the PCF device and performing the following steps may be as follows: If the BSF device determines that deletion management needs to be performed on the session record, the BSF device determines the PCF device based on information included in the session record.

In this step, execution of determining that deletion management needs to be performed on the session record may be triggered periodically or may be triggered by an event. An event-triggering case may be that usage of storage space used to store the session record in the BSF device reaches a specific threshold. A specific trigger condition is not uniquely limited in this embodiment.

The session record may be stored in a form of a session record library in the BSF device. Management information of the session record may be in a form of a data table. A session record validity period is set on a BSF device side for all session records. As shown in Table 1, a session record includes a session identifier and creation time. Duration of storing each session record in the B SF device may be calculated according to Table 1. If the duration exceeds the session record validity period, it may be determined that deletion management needs to be performed on the session record. The deletion management may be understood as that whether to delete the session record needs to be determined.

**Table 1**

| Session identifier | Creation time |
|---|---|
| Session record 1 | T1 |
| Session record 2 | T2 |
| ... | ... |
| Session record n | Tn |

302: The BSF device sends a positioning parameter of the session record to the PCF device; and after receiving the positioning parameter, the PCF device queries whether a session corresponding to the positioning parameter exists in the PCF device, generates a response message, and sends the response message to the BSF device.

According to the foregoing description, if there is only one session record whose storage duration exceeds the session record validity period, a positioning parameter of the one session record, such as a session identifier of the session record, may be sent. If there are a plurality of session records whose storage durations exceed the session record validity period, positioning parameters of the session records may be sent one by one, or po sitioning parameters of all the session records may be sent to the PCF in a table form.

The positioning parameter may be carried in a session query request message. The foregoing response message is a response to the session query request message, and may be referred to as a session query response message. The response message may indicate that the session corresponding to the positioning parameter is not found, or the response message carries an error code used to indicate that the session corresponding to the positioning parameter does not exist in the PCF device. If the session corresponding to the positioning parameter is found, the response message may carry related information of the session, or information indicating that the session corresponding to the positioning parameter is found.

303: The BSF device receives the response message returned by the PCF device, and deletes the session record when determining, based on the response message, that the session corresponding to the positioning parameter does not exist in the PCF device.

In this embodiment, the BSF device that stores the session record sends the positioning parameter to the corresponding PCF device. When it is determined that the corresponding session does not exist, information about the session record may be accurately determined as junk data, so that the junk data is accurately recognized and deleted, and session stability can be further ensured while a storage capacity of the BSF device is ensured.

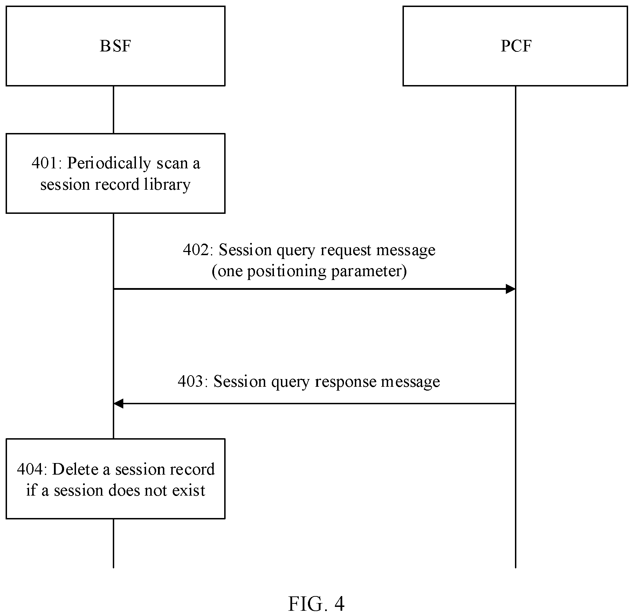

As shown in FIG. 4, an embodiment provides a procedure of determining, one by one, whether a session record needs to be deleted. Details are as follows.

401: A BSF device periodically scans a session record library of the BSF device, determines, one by one, whether duration of storing a session record in the BSF device exceeds a session record validity period preset in a system, and performs 402 when finding one session record.

402: The BSF device sends, based on PCF device address information stored in the found session record, a session query request message to a PCF device corresponding to the PCF device address information.

The PCF device address information includes an FQDN of the PCF device or an IP address + port of the PCF device.

The session query request message carries a positioning parameter used to uniquely identify the session record, or a positioning parameter used to uniquely identify a session corresponding to the session record. The positioning parameter may be Bindingld, or may be one or more of a user equipment address, a DNN, and an S-NNSAI. The user equipment address may be one or more of an IPv4 address, an IPv6 address, and a MAC address.

In this embodiment, the BSF device may send the session query request message to the PCF device through an Npcf interface. The Npcf interface is a name of a service interface that is defined by the 3GPP and that is used by the PCF to externally provide a service. In this embodiment, a service API is newly added to the Npcf interface, and can be invoked by the BSF to query whether a specified session record exists in the PCF device, that is, whether the session record is valid. Main parameters include the following.

Input parameters:
1. A parameter for uniquely identifying a single session is included, for example, Bindingld or one or more of a user equipment address, a DNN, and an S-NNSAI, and the user equipment address may be one or more of an IPv4 address, an IPv6 address, and a MAC address.
2. A parameter list is included, and each parameter or parameter combination in the parameter list uniquely identifies a session. For a parameter of a single session, refer to the description of 1.

Output parameters:
1. For a session query request message for querying a single session, an error code indicates a query result, and needs to be capable of being used to determine whether the session exists or does not exist in the PCF device. A specific error code value may be arbitrarily set.
2. For a session query request message for querying a plurality of sessions, the PCF needs to give an error code for a query result of each session, and the error code needs to be capable of being used to determine whether the session exists or does not exist in the PCF device. Refer to descriptions in Table 2 and Table 3 in the following embodiment.

403: The PCF device queries a session database of the PCF device based on the positioning parameter carried in the session query request message, generates a session query response message based on a query result, and returns the session query response message to the BSF device.

More specifically, if the query result is that the session corresponding to the positioning parameter does not exist in the PCF device, the response message carries an agreed error code to indicate that the session record corresponding to the positioning parameter does not exist.

The error code may be predetermined by a communications system, or may be any error code agreed on by the PCF device and the BSF device.

404: The BSF device receives the session query response message returned by the PCF device; and if the query result in the query response message is that the session corresponding to the positioning parameter exists, continues to scan a next session record; or if the query result in the query response message is that the session corresponding to the positioning parameter does not exist, deletes the session record corresponding to the positioning parameter and then continues to scan a next session record.

More specifically, if the error code is obtained from the query response message, it is determined that the session record whose storage duration exceeds the session record validity period preset in the system does not exist in the PCF device. In this case, the session record corresponding to the positioning parameter is deleted, and then the next session record continues to be scanned. If the error code is not obtained from the query response message, it is determined that the session record whose storage duration exceedsthe session record validity period preset in the system is in the PCF device. In this case, the session record cannot be deleted, and then the next session record continues to be scanned.

In addition to the foregoing error code, there may be an error code used to indicate another meaning in the foregoing response message. This is not limited in this embodiment.

In this embodiment, a session record creation procedure may be as follows: When user equipmentregisters and authenticates, an SMF device invokes a service of the PCF device to create a QoS policy, and a session corresponding to the user equipment exists in the PCF device. The PCF device invokes a service of the BSF device to create a session record of the session. When the user equipment is deregistered, the SMF device invokes the service of the PCF device to delete the QoS policy. The PCF device deletes the locally stored session corresponding to the user equipment, and further invokes the service of the BSF device to delete the session record corresponding to the session. Therefore, the session records on the BSF device are in a one-to-one correspondence with the sessions of the user equipment in the PCF device. Therefore, whether the session record on the BSF device is valid is determined based on the session query result of the PCF device, that is, a result of querying whether the session corresponding to the positioning parameter exists, so that correctness can be ensured.

In this embodiment, the BSF device actively performs junk data cleaning, to avoid a problem that junk data cannot be deleted in a timely manner in various abnormal scenarios due to dependence on another network element.

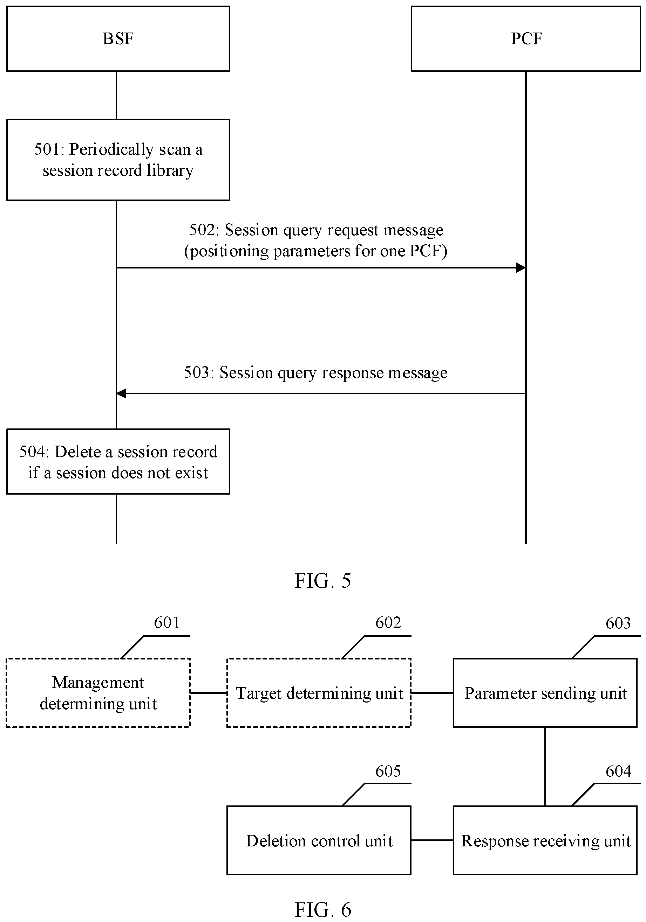

As shown in FIG. 5, an embodiment provides a procedure of determining, one by one, whether a session record needs to be deleted. Details are as follows.

501: A BSF device periodically scans a session record library of the BSF device; determines whether there is a session record that is in all session records corresponding to a same PCF device and whose storage duration in the BSF device exceeds a session record validity period preset in a system; and if there is the session record, performs 502; or if there is not the session record, determines whether there is a session record that is in all session records corresponding to a next PCF device and whose storage duration in the BSF device exceeds the session record validity period preset in the system.

502: The BSF device sends, based on PCF device address information stored in the found session record, a session query request message to a PCF device corresponding to the PCF device address information.

The PCF device address information includes an FQDN of the PCF device or an IP address + port of the PCF device.

The session query request message includes a positioning parameter list, and each positioning parameter in the positioning parameter list is used to uniquely identify a session record, or uniquely identify a session corresponding to a session record. The positioning parameter may be Bindingld, or may be one or more of a user equipment address, a DNN, and an S-NNSAI. The user equipment address may be one or more of an IPv4 address, an IPv6 address, and a MAC address. Table 2 shows an example of the positioning parameter.

**Table 2**

| Session identifier |
|---|
| Bindingld 1 |
| Bindingld 2 |
| ... |
| Bindingld n |

503: The PCF device queries a session database of the PCF device based on the positioning parameter list carried in the session query request message, generates a query response message based on a query result, and returns the session query response message to the BSF device.

More specifically, if the query result is that the session corresponding to the positioning parameter does not exist in the PCF device, the response message carries an agreed error code to indicate that the session record corresponding to the positioning parameter does not exist. Each positioning parameter may correspond to an agreed error code, or information used to indicate that a session exists.

The error code may be predetermined by a communications system, or may be any error code agreed on by the PCF device and the BSF device. Table 3 shows an example of a query result corresponding to Table 2. Details are as follows:

**Table 3**

| Session identifier | Query result |
|---|---|
| Bindingld 1 | Agreed error code |
| Bindingld 2 | Non-agreed error code |
| ... | ... |
| Bindingld n | Agreed error code |

According to Table 3, it may be determined that a session corresponding to the Bindingld 2 still exists in the PCF device, and sessions corresponding to the Bindingld 1 and the Bindingld n no longer exist in the PCF device.

504: The BSF device receives the session query response message returned by the PCF device, deletes a session record corresponding to an item that is in the session query response message and that indicates that a session does not exist in the PCF device, and then determines whether there is a session record that is in all session records corresponding to a next PCF device and whose storage duration in the BSF device exceeds the session record validity period preset in the system.

A main difference between this embodiment and the previous embodiment is that validity is determined session record by session record in the previous embodiment, but validity determining is performed in sequence for a plurality of session records corresponding to the PCF in this embodiment. Accordingly, fewer messages are sent and received.

An embodiment of the present invention further provides a binding support function BSF device, as shown in FIG. 6. The BSF device stores a session record, the session record is created by a policy control function PCF device, and the BSF device includes:
a parameter sending unit 603, configured to send a positioning parameter of the session record to the PCF device;
a response receiving unit 604, configured to receive a response message returned by the PCF device; and
a deletion control unit 605, configured to delete the session record when determining, based on the response message, that a session corresponding to the positioning parameter does not exist in the PCF device.

In an optional implementation, the BSF device further includes:
a management determining unit 601, configured to determine that deletion management needs to be performed on the session record; and
a target determining unit 602, configured to determine the PCF device based on the session record after the determining unit determines that deletion management needs to be performed on the session record.

In an optional implementation, the response receiving unit 604 is configured to receive the response message returned by the PCF device, where the response message carries an error code used to indicate that the session corresponding to the positioning parameter does not exist in the PCF device; and
the deletion control unit 605 is configured to determine, based on the error code, that the session corresponding to the positioning parameter does not exist in the PCF device.

In an optional implementation, the target determining unit 602 is configured to read, from the session record, an address of the PCF device that is recorded in the session record; and
the parameter sending unit 603 is configured to send the positioning parameter of the session record to the address of the PCF device.

In an optional implementation, the management determining unit 601 is configured to: read a timestamp of the session record from the session record; determine, based on the timestamp, duration of storing the session record in the BSF device; and determine that the duration of storing the session record in the BSF device exceeds a validity period of the session record; and
the parameter sending unit 603 is configured to send the positioning parameter of the session record to the PCF device when the management determining unit 601 determines that the duration of storing the session record in the BSF device exceeds the validity period of the session record.

In an optional implementation, the management determining unit 601 is further configured to update the timestamp in the session record information to a current time point if the deletion control unit 605 determines, based on the response message, that the session corresponding to the positioning parameter exists.

In an optional implementation, the positioning parameter includes a binding identifier of the session record, an address of user equipment that uses the session, a data network name DNN, or S-NSSAI.

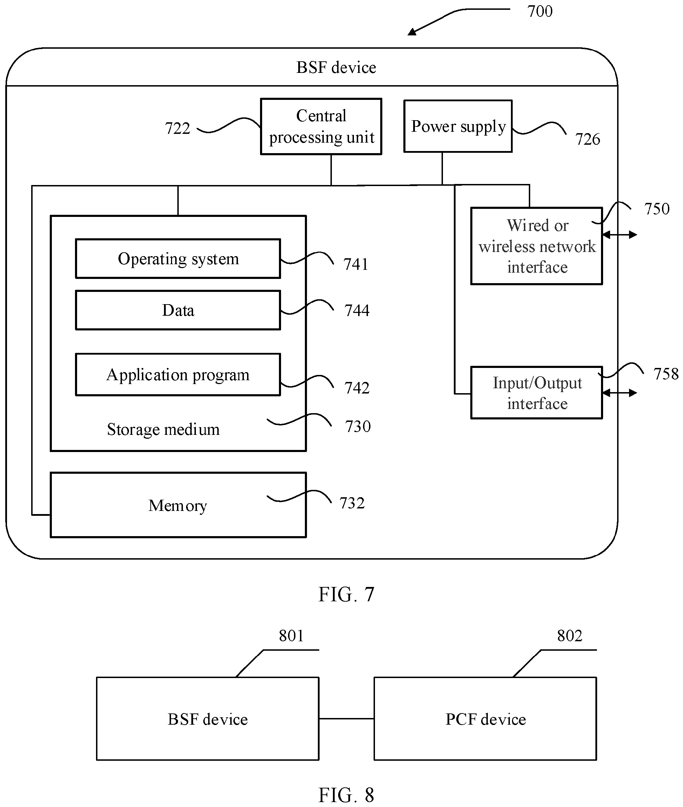

As shown in FIG. 7, an embodiment of the present invention further provides a BSF device. As shown in FIG. 7, the BSF device 700 may vary greatly with a configuration or performance, and may include one or more central processing units (central processing units, CPU) 722 (for example, one or more processors) and memories 732, and one or more storage media 730 (for example, one or more storage devices) for storing an application program 742 or data 744. The memory 732 and the storage medium 730 may implement temporary or persistent storage. The program stored in the storage medium 730 may include one or more modules (not shown in the figure), and each module may include a series of instruction operations on the BSF device. Further, the central processing unit 722 may be configured to communicate with the storage medium 730, to perform a series of instruction operations in the storage medium 730 on the BSF device 700.

The BSF device 700 may further include one or more power supplies 726, one or more wired or wireless network interfaces 750, one or more input/output interfaces 758, and/or one or more operating systems 741, such as Windows ServerTM, Mac OS XTM, UnixTM, LinuxTM, and FreeBSDTM.

In the foregoing embodiment, steps performed by the BSF device may be based on a structure of the BSF device shown in FIG. 7. More specifically, all content in 301 to 303 shown in FIG. 3 other than content that the PCF performs query, generates the response message, and sends the response message in 302, content of 401, 402, and 404 in FIG. 4, and content of 501, 502, and 503 in FIG. 5 are all performed by the BSF device based on the structure shown in FIG. 7. More specifically, in FIG. 6, the management determining unit 601, the target determining unit 602, and the deletion control unit 605 are implemented by the processor 722, and the parameter sending unit 603 and the response receiving unit 604 are implemented by the wired or wireless network interface 750 or the input/output interface 958.

An embodiment of the present invention further provides another BSF device, including a processor, a memory, and a transceiver. The processor, the memory, and the transceiver are connected in a communicable manner. The memory stores a session record, and the session record is created by a policy control function PCF device. The memory stores program code. The processor is configured to read the program code and cooperate with the transceiver to implement all content in 301 to 303 shown in FIG. 3 other than content that the PCF performs query, generates the response message, and sends the response message in 302, content of 401, 402, and 404 in FIG. 4, and content of 501, 502, and 503 in FIG. 5.

An embodiment of the present invention further provides a communications system. As shown in FIG. 8, the communications system includes a BSF device 801 and a PCF device 802. The BSF device is the BSF device provided in any one of the foregoing embodiments. Refer to the systems shown in FIG. 1 and FIG. 2 together.

An embodiment of the present invention further provides a computer-readable storage medium. The storage medium stores program code, the program code includes program instructions, and when being executed by a processor, the program instructions enable the processor to cooperate with a transceiver to implement a function of any method in embodiments of the present invention. For details, refer to the foregoing method procedure. Details are not described herein again.

An embodiment of the present invention further provides a computer program product. The computer program product includes program instructions. When the program instructions are executed by a processor, the processor and a transceiver cooperate to implement a function of any method in embodiments of the present invention. For details, refer to the foregoing method procedure. Details are not described herein again.

A person of ordinary skill in the art may understand that all or some of the procedures of the methods in the foregoing embodiments may be implemented by a computer program instructing related hardware. The program may be stored in a computer-readable storage medium. When the program is executed, the procedures of the methods in the foregoing embodiments may be performed.The foregoing storage medium includes: any medium that can store program code, such as a ROM or a random access memory RAM, a magnetic disk, or an optical disc.

## Claims

1. A data management method, wherein a binding support function BSF device stores a session record, the session record is created by a policy control function PCF device, and the method comprises:
sending, by the BSF device, a positioning parameter of the session record to the PCF device; and
receiving, by the BSF device, a response message returned by the PCF device, and deleting the session record when determining, based on the response message, that a session corresponding to the positioning parameter does not exist in the PCF device.

2. The method according to claim 1, wherein the receiving, by the BSF device, a response message returned by the PCF device, and determining, based on the response message, that a session corresponding to the positioning parameter does not exist in the PCF device comprises:
receiving, by the BSF device, the response message returned by the PCF device, wherein the response message carries an error code used to indicate that the session corresponding to the positioning parameter does not exist in the PCF device; and determining, based on the error code, that the session corresponding to the positioning parameter does not exist in the PCF device.

3. The method according to claim 1 or 2, wherein the method further comprises:
reading, from the session record, an address of the PCF device that is recorded in the session record; and
the sending, by the BSF device, a positioning parameter of the session record to the PCF device comprises:
sending, by the BSF device, the positioning parameter of the session record to the address of the PCF device.

4. The method according to claim 1 or 2, wherein the method further comprises:
reading, by the BSF device, a timestamp of the session record from the session record; determining, based on the timestamp, duration of storing the session record in the BSF device; and sending the positioning parameter of the session record to the PCF device when determining that the duration of storing the session record in the BSF device exceeds a validity period of the session record.

5. The method according to claim 4, wherein the method further comprises:
updating the timestamp in the session record information to a current time point if determining, based on the response message, that the session corresponding to the positioning parameter exists.

6. The method according to claim 1 or 2, wherein the positioning parameter comprises:
a binding identifier of the session record, an address of user equipment that uses the session, a data network name DNN, or single network slice selection assistance information S-NSSAI.

7. A binding support function BSF device, wherein the BSF device stores a session record, the session record is created by a policy control function PCF device, and the BSF device comprises:
a parameter sending unit, configured to send a positioning parameter of the session record to the PCF device;
a response receiving unit, configured to receive a response message returned by the PCF device; and
a deletion control unit, configured to delete the session record when determining, based on the response message, that a session corresponding to the positioning parameter does not exist in the PCF device.

8. The BSF device according to claim 7, wherein
the response receiving unit is configured to receive the response message returned by the PCF device, wherein the response message carries an error code used to indicate that the session corresponding to the positioning parameter does not exist in the PCF device; and
the deletion control unit is configured to determine, based on the error code, that the session corresponding to the positioning parameter does not exist in the PCF device.

9. The BSF device according to claim 7 or 8, wherein the BSF device further comprises:
a target determining unit, configured to read, from the session record, an address of the PCF device that is recorded in the session record; and
the parameter sending unit is configured to send the positioning parameter of the session record to the address of the PCF device.

10. The BSF device according to claim 7 or 8, wherein the BSF device further comprises:
a management determining unit, configured to: read a timestamp of the session record from the session record; determine, based on the timestamp, duration of storing the session record in the BSF device; and determine that the duration of storing the session record in the BSF device exceeds a validity period of the session record; and
the parameter sending unit is configured to send the positioning parameter of the session record to the PCF device when the management determining unit determines that the duration of storing the session record in the BSF device exceeds the validity period of the session record.

11. The BSF device according to claim 10, wherein
the management determining unit is further configured to update the timestamp in the session record information to a current time point if the deletion control unit determines, based on the response message, that the session corresponding to the positioning parameter exists.

12. The BSF device according to claim 7 or 8, wherein the positioning parameter comprises:
a binding identifier of the session record, an address of user equipment that uses the session, a data network name DNN, or single network slice selection assistance information S-NSSAI.

13. A binding support function BSF device, comprising a processor, a memory, and a transceiver, wherein the processor, the memory, and the transceiver are connected in a communicable manner, the memory stores a session record, and the session record is created by a policy control function PCF device;
the memory stores program code; and
the processor is configured to read the program code and cooperate with the transceiver to implement a function of the method according to any one of claims 1 to 7.

14. A communications system, comprising a binding support function BSF device and a policy control function PCF device, wherein the BSF device stores a session record, the session record is created by the PCF device, and the BSF device is the BSF device according to any one of claims 7 to 12; and
the PCF device is configured to send a response message to the BSF device based on a positioning parameter sent by the BSF device, wherein the response message carries information used to determine whether a session corresponding to the positioning parameter exists in the PCF device.

15. A computer-readable storage medium, wherein
the storage medium stores program code, and the program code comprises program instructions; and when the program instructions are executed by a processor, the processor is enabled to cooperate with a transceiver to implement a function of the method according to any one of claims 1 to 6.
